(19) Europäisches Patentamt
European Patent Office
Office européen des brevets

(11) **EP 2 645 112 B1**

(12) **FASCICULE DE BREVET EUROPEEN**

(45) Date de publication et mention
de la délivrance du brevet:
**24.02.2016 Bulletin 2016/08**

(51) Int Cl.:
***G01P 5/26*** *(2006.01)*    ***G01S 17/58*** *(2006.01)*

(21) Numéro de dépôt: **13161875.3**

(22) Date de dépôt: **29.03.2013**

(54) **Système et procédé d'anémométrie laser**

Laser-Anemometrie-System und -Verfahren

Laser anemometry system and method

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.03.2012 FR 1200945**

(43) Date de publication de la demande:
**02.10.2013 Bulletin 2013/40**

(73) Titulaire: **Thales**
**92200 Neuilly Sur Seine (FR)**

(72) Inventeurs:
• **Lacondemine, Xavier**
**26000 VALENCE (FR)**
• **Martin, Nicolas**
**26500 BOURG LES VALENCE (FR)**
• **Schlotterbeck, Jean-Pierre**
**26300 ROCHEFORT-SAMSON (FR)**
• **Baral-Baron, M.Grégory**
**26027 VALENCE Cedex (FR)**

(74) Mandataire: **Brunelli, Gérald et al**
**Marks & Clerk France**
**Immeuble Visium**
**22, avenue Aristide Briand**
**94117 Arcueil Cedex (FR)**

(56) Documents cités:
**EP-A2- 2 282 216**

**Description**

La présente invention concerne un dispositif d'anémométrie laser. Elle s'applique en particulier au calcul de la vitesse d'un aéronef par rapport à l'air environnant, également appelée vitesse air. Ce calcul est réalisé par détermination de la vitesse des particules environnantes et naturellement présent dans l'atmosphère.

Il est connu, pour détecter la vitesse air d'un aéronef, des systèmes d'anémométrie laser utilisant la rétrodiffusion d'un faisceau laser gaussien sur les particules environnantes du système, comme divulgué dans la demande de brevet EP 2282216. Ces systèmes présentent un faisceau laser dont le point de focalisation, est spatialement très localisé et sont conçus pour détecter uniquement la présence de particules passant audit point de focalisation. Cette caractéristique technique permet d'obtenir une mesure de vitesse air locale précise même lorsque l'air environnant l'aéronef présente un gradient de vitesse. Ces systèmes présentent deux inconvénients qui apparaissent dans des conditions particulières d'ensemencement de l'air en particules.

Le premier consiste en la possible détection de grosses particules, du fait de leur section de rétrodiffusion élevée, même si elles ne passent pas par le point de focalisation. Dans ce cas les mesures peuvent être faussées du fait du gradient de vitesse et de l'inertie inhérente aux grosses particules.

Le second inconvénient consiste en une indisponibilité de l'information de vitesse lorsqu'aucune particule détectable ne passe par le point de focalisation du faisceau laser.

La présente invention vise notamment à remédier à ces problèmes en utilisant un ensemble de traitements appliqués aux mesures des faisceaux rétrodiffusés afin d'obtenir la vitesse qu'aurait une particule virtuelle passant au point de focalisation du faisceau laser.

Il est proposé, selon un aspect de l'invention, un système d'anémométrie laser comprenant un ensemble d'au moins une source laser 101 cohérente fournissant un faisceau incident, ledit faisceau étant rétrodiffusé par un ensemble de particules traversant ledit faisceau incident. Le système comprend également des moyens de mélange 102, respectivement associés à une source laser, dudit faisceau rétrodiffusé et d'un faisceau de référence, ledit faisceau de référence étant la duplication dudit faisceau incident, créant une onde d'interférométrie. Le système comprend de plus des moyens de conversion 103, respectivement associés à une source laser, convertissant ladite onde en un signal électrique dont l'intensité instantanée est proportionnelle à la puissance instantanée de ladite onde et des premiers moyens de détermination 104, respectivement associés à une source laser, d'un diagramme temps-fréquence dudit signal électrique. Enfin le système comprend des deuxièmes moyens de détermination 105, respectivement associés à une source laser, de tâches dudit diagramme, chaque tâche étant un ensemble de points connexes dudit diagramme, ayant dépassé un seuil de détection, des moyens de calcul 106, respectivement associés à une source laser, d'une moyenne de la fréquence, d'une durée et d'une pente caractérisant l'évolution de la fréquence en fonction du temps dans le diagramme temps-fréquence, respectivement associées à une tâche et des troisièmes moyens de détermination 107 de la vitesse air à partir de tout ou partie desdites moyennes de la fréquence, desdites durées et desdites pentes. De plus les troisièmes moyens de détermination 107 de la vitesse air sont adaptés pour le calcul d'une fréquence Doppler, ladite fréquence Doppler étant la moyenne de tout ou partie desdites moyennes de la fréquence respectivement associées à des tâches pour lesquelles la condition suivante est vérifiée: ladite multiplication de ladite pente par le carré de ladite durée est inférieure à un troisième seuil.

Dans le cas où le diagramme temps-fréquence utilisé correspond à un spectrogramme du signal électrique, le seuil de détection est typiquement compris entre 8 et 14 dB, avec comme valeur préférentielle 12 dB. Le niveau de référence (0 dB) est le niveau moyen attendu en l'absence de particules.

Ce dispositif permet donc de déterminer la vitesse de l'aéronef, en se basant sur l'ensemble des particules coupant le faisceau laser. Il est aussi possible d'utiliser le dispositif même lorsqu'aucune particule ne passe au point de focalisation du laser.

La vérification de la condition: ladite multiplication de ladite pente par le carré de ladite durée est inférieure à un seuil prédéterminé permet de déterminer que la particule est une particule ayant coupé le faisceau laser à une distance au point de focalisation (ou distance au « waist » en langue anglaise) inférieure à un seuil de distance (typiquement $z_{max} = z_r = 5mm$ pour un faisceau gaussien de rayon au point de focalisation égal à $\omega_0 = 50\mu m$).

On utilise pour cela les relations entre la distance au point de focalisation (c'est-à-dire la coordonnée $z_0$, référencée par rapport au point de focalisation, à laquelle la particule coupe le faisceau) et les caractéristiques de durée, de pente et de variation de fréquence de la tâche correspondante dans le diagramme temps fréquence :

$$duree = \frac{2.\omega(z_0)}{V_{trans}} = \frac{2.\omega_0.\sqrt{z_0^2 + z_R^2}}{V_{trans}.z_R}$$

$$pente = \frac{2.V_{trans}^2}{\lambda.z_0.\left[1+\left(\frac{z_R}{z_0}\right)^2\right]}$$

$$\Delta f = pente.duree = \frac{4.\omega_0.V_{trans}}{\lambda.z_R.\sqrt{1+\left(\frac{z_R}{z_0}\right)^2}}$$

avec par définition $z_R = \frac{\pi.\omega_0^2}{\lambda}$

et sachant que le rayon du faisceau laser gaussien à la coordonnée $z$ vaut $\omega(z) = \omega_0\sqrt{1+\left(\frac{z}{z_R}\right)^2}$

$V_{trans}$ est définie comme la projection de la vitesse de la particule considérée dans le plan orthogonal à l'axe du faisceau laser,

$\lambda$ est la longueur d'onde du laser.

Différentes méthodes permettent de sélectionner les particules coupant le faisceau à proximité du point de focalisation :

Une première méthode, qui ne fait pas l'objet de l'invention, consiste à sélectionner les tâches dont la durée est inférieure à un seuil de durée estimé en tenant compte de l'estimation de la vitesse transversale $V_{trans}$ à partir de la vitesse Doppler et d'une hypothèse d'orientation de la vitesse de la particule par rapport au faisceau. En effet, la relation liant la distance au point de focalisation (ou valeur absolue de la coordonnée $z_0$, à la durée est strictement croissante de sorte que la sélection des particules pour lesquelles $|z_0| < z_{max}$ est équivalente à la sélection des particules pour lesquelles

$$duree < duree(z_{max}) = \frac{2.\omega_0.\sqrt{z_{max}^2 + z_R^2}}{V_{trans}.z_R}.$$

Le premier seuil de durée se déduit de l'équation $premier\_seuil\_duree = \frac{2.\omega_0.\sqrt{z_{max}^2 + z_R^2}}{V_{trans}.z_R}$ soit $premier\_seuil\_duree = \frac{2\sqrt{2}.\omega_0}{V_{trans}}$ en considérant $z_{max} = z_r$. Ce seuil vaudra ainsi 1,4 $\mu$s pour $\omega_0 = 50\mu m$ et

$V_{trans} = 100 m/s$.

Une seconde méthode, qui ne fait pas l'objet de l'invention, consiste à sélectionner les tâches dont la variation de fréquence $\Delta f = duree.pente$ est inférieure en valeur absolue à un seuil de variation de fréquence estimé en tenant compte de l'estimation de la vitesse transversale $V_{trans}$ à partir de la vitesse Doppler et d'une hypothèse d'orientation de la vitesse de la particule par rapport au faisceau, l'orientation de la vitesse de la particule par rapport au faisceau laser peut par exemple être estimée à partir l'orientation du vecteur vitesse air par rapport à l'axe de mesure et d'un éventuel terme de compensation du champ aérodynamique local.).

En effet, la relation liant la distance au point de focalisation à la valeur absolue de la variation de fréquence est strictement croissante. Sélectionner les particules telles que $|z_0| < z_{max}$ est donc équivalent à sélectionner les tâches

pour lesquelles

$$\left|\Delta f\right| < \Delta f\left(z_{\max}\right) = \frac{4.V_{trans}}{\pi.\omega_0.\sqrt{1+\left(\dfrac{z_R}{z_{\max}}\right)^2}}.$$

Le deuxième seuil de variation de fréquence se déduit de l'équation

$$deuxième\_seuil\_\Delta f = \frac{4.V_{trans}}{\pi.\omega_0.\sqrt{1+\left(\dfrac{z_R}{z_{\max}}\right)^2}} \quad \text{soit} \quad deuxième\_seuil\_\Delta f = \frac{4.V_{trans}}{\pi.\omega_0.\sqrt{2}} \quad \text{en considérant}$$

$z_{\max} = z_r$. Il vaudra ainsi environ 1.8 MHz pour $\omega_0 = 50\mu m$ et $V_{trans} = 100 m/s$.

La méthode selon l'invention consiste à sélectionner les particules pour lesquelles $z_0 < z_{\max}$, la coordonnée $z_0$ de la particule étant estimée pour chaque tâche détectée, à partir de l'équation suivante (qui résulte d'une combinaison des équations précédentes) qui présente l'intérêt de ne nécessiter aucune hypothèse d'orientation de la vitesse de la particule par rapport au faisceau.

$$z_0 = \frac{pente \cdot duree^2 \cdot \lambda \cdot z_R{}^2}{8 \cdot \omega_0{}^2}$$

ou encore $z_0 = \dfrac{pente \cdot duree^2 \cdot \pi^2 \cdot \omega_0{}^2}{8 \cdot \lambda}$

Ayant estimé $z_0$ à partir de l'équation précédente, le seuillage consiste à sélectionner les particules pour lesquelles $|z_0| < z_{\max}$ avec par exemple $z_{\max} = z_r$. Cela revient aussi à sélectionner les particules pour lesquelles :

$$pente \cdot duree^2 < troisième\_seuil.pente \cdot duree^2 = \frac{8 \cdot \lambda \cdot z_{\max}}{\pi^2 \cdot \omega_0^2}$$

soit, en considérant $z_{\max} = z_r$, $\quad troisième\_seuil.pente \cdot duree^2 = \dfrac{8}{\pi}$

ou encore $troisième\_seuil.\Delta f \cdot duree = \dfrac{8}{\pi}.$

Ce troisième seuil étant calculé à partir de l'équation suivante

$$troisième\_seuil.pente \cdot duree^2 = \frac{8 \cdot \lambda \cdot z_{\max}}{\pi^2 \cdot \omega_0^2} \quad \text{où } \lambda \text{ représente la longueur d'onde du laser, } \omega 0 \text{ repré-}$$

sente le rayon du faisceau en son point de focalisation, zmax correspond à la distance maximale au point de focalisation en fonction de la sélectivité spatiale recherchée.

Cette caractéristique technique permet donc d'améliorer la précision de l'anémomètre laser en n'utilisant que les informations de vitesse apportées par les particules les plus représentatives de la vitesse air.

Selon un mode de réalisation les troisièmes moyens de détermination 107 de la vitesse air sont adaptés pour la détermination de paramètres d'une courbe théorique, de façon à ce que les points d'un graphique dont le premier axe représente une fréquence et le deuxième axe représente soit une pente soit une variation de fréquence, et contenant un ensemble de points, chaque point étant respectivement associé à une desdites tâches et chaque point ayant comme coordonnées suivant le premier et le second axe respectivement la moyenne de la fréquence et la pente ou la variation de fréquence de la dite tâche, se rapprochent le plus de ladite courbe et la détermination d'une fréquence Doppler, ladite fréquence Doppler correspondant à une singularité sur ladite courbe théorique.

Par singularité de la courbe $pente = g(f)$ ou de la courbe $\Delta f = g(f)$, nous entendons un point très caractéristique qui correspond à la fois au passage par zéro de la courbe et à une forte pente de la courbe.

Selon un mode de réalisation les troisièmes moyens de détermination de la vitesse air sont adaptés pour la détermination de ladite fréquence Doppler par l'utilisation d'une régression linéaire à partir dudit graphique

Selon un mode de réalisation les troisièmes moyens de détermination 107 de la vitesse air sont adaptés pour la détermination de ladite fréquence Doppler par corrélation entre ladite courbe théorique et ledit graphique.

Ces deux caractéristiques offrent l'avantage de pouvoir améliorer les performances de détermination de la vitesse air dans des conditions atmosphériques particulières pour lesquelles aucune particule n'est détectée au point de focalisation.

Selon un mode de réalisation les moyens de calcul 106 sont adaptés pour l'utilisation des relations suivantes :

$$P_b(f,t) = \frac{P_u(f,t)}{\iint\limits_{t\hat{a}che} P_u(f,t)\,f\,t\,df\,dt}$$

$$m_t = \iint\limits_{t\hat{a}che} P_u(f,t)\,t\,df\,dt$$

$$m_f = \iint\limits_{t\hat{a}che} P_u(f,t)\,f\,df\,dt$$

$$\sigma_t^2 = \iint\limits_{t\hat{a}che} P_u(f,t)\,t^2\,df\,dt - m_t^2$$

$$\rho_{t,f} = \iint\limits_{t\hat{a}che} P_u(f,t)\,t\,f\,df\,dt - m_t m_f$$

$$pente = \frac{\rho_{t,f}}{\sigma_t^2}$$

$$dur\acute{e}e = 4\sqrt{2}\sigma_t$$

Dans lesquelles *tâche* est l'ensemble des points d'une desdites tâches, $P_u(f,t)$ est la valeur du graphique temps fréquence pour la fréquence *f* et le temps *t, $m_f$* est la moyenne de la fréquence de ladite tâche, *pente* est la pente de ladite tâche et *durée* est la durée de la dite tâche.

Cette caractéristique technique permet d'améliorer le calcul de la pente des tâches et ainsi d'améliorer la précision de la détermination de la vitesse air

Selon un mode de réalisation lesdits moyens de calcul 106 sont adaptés pour la détermination de la pente d'une desdites tâches en utilisant une régression linéaire sur ladite tâche

Cette caractéristique technique permet d'améliorer le calcul de la pente des tâches et ainsi d'améliorer la précision de la détermination de la vitesse air.

Avantageusement le procédé d'anémométrie laser comporte les étapes suivantes :

- Une étape d'émission d'un faisceau incident par au moins une source laser cohérente, ledit faisceau étant rétrodiffusé par un ensemble de particules traversant ledit faisceau incident,
- Une étape de mélange, respectivement associés à une source laser, dudit faisceau rétrodiffusé et d'un faisceau de référence, ledit faisceau de référence étant la duplication dudit faisceau incident, créant une onde d'interférométrie
- Une étape de conversion, respectivement associés à une source laser, convertissant ladite onde en un signal électrique dont l'intensité instantanée est proportionnelle à la puissance instantanée de ladite onde,
- Une première étape de détermination, respectivement associés à une source laser, d'un diagramme temps fréquence dudit signal électrique
- Une deuxième étape de détermination, respectivement associés à une source laser, de tâches dudit diagramme, chaque tâche étant un ensemble de points connexes dudit diagramme, ayant dépassé un seuil de détection,
- Une étape de calcul, respectivement associés à une source laser, d'une moyenne de la fréquence, d'une durée et d'une pente, respectivement associées à une tâche.

Il comprend en outre :

- Une troisième étape de détermination de la vitesse air à partir de tout ou partie desdites moyennes de la fréquence, desdites durées et desdites pentes. De plus la troisième étape de détermination 107 de la vitesse air est adaptée pour le calcul d'une fréquence Doppler, ladite fréquence Doppler étant la moyenne de tout ou partie desdites moyennes de la fréquence respectivement associées à des tâches pour lesquelles la condition suivante est vérifiée: ladite multiplication de ladite pente par le carré de ladite durée est inférieure à un troisième seuil.

L'invention sera mieux comprise et d'autres avantages apparaîtront à la lecture de la description détaillée faite à titre d'exemple non limitatif et à l'aide des figures parmi lesquelles :

- La figure 1 présente un premier mode de réalisation du dispositif, selon un aspect de l'invention
- La figure 2 présente l'instant pour lequel la distance, entre la particule considéré et l'axe de mesure, est minimale suivant une coupe dans le plant $z = z_0$.
- La figure 3 présente l'instant pour lequel la distance, entre la particule considérée et l'axe de mesure, est minimale suivant une coupe dans le plan $y = y_0$.
- La figure 4 présente un premier mode de réalisation du module 107 de détermination de la vitesse air
- La figure 5 présente la localisation des angles des différentes sources laser
- La figure 6 présente un deuxième mode de réalisation du module 107 de détermination de la vitesse air
- La figure 7 présente un troisième mode de réalisation du module 107 de détermination de la vitesse air

La présente invention concerne un dispositif d'anémométrie laser. Cette invention présente un intérêt dans le cadre du transport aérien afin de connaitre précisément la vitesse d'un aéronef par rapport à la masse d'air environnant cet aéronef.

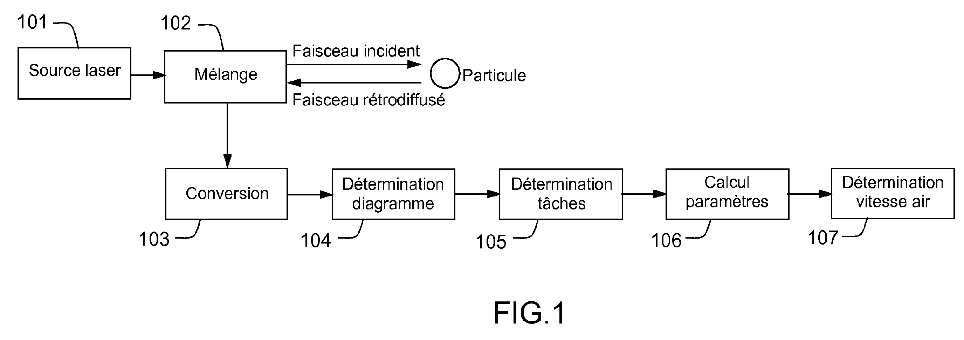

Le dispositif tel que présenté figure 1 comporte une source laser cohérente 101 émettant un faisceau laser incident. Ce faisceau laser comporte un point de focalisation. Des particules coupent, lors de leur déplacement, le faisceau laser. Ces particules provoquent alors une rétrodiffusion du faisceau laser. Le dispositif comporte un module de mélange 102 du faisceau rétrodiffusé et d'un faisceau de référence. Ce faisceau de référence étant la duplication du faisceau incident, ce module de mélange créant une onde d'interférométrie. Un module de conversion 103 permet ensuite de convertir l'onde d'interférométrie en un signal électrique dont la puissance instantanée est proportionnelle à la puissance instantanée de l'onde d'interférométrie et dont la fréquence moyenne est proportionnelle à la projection de la vitesse de la particule selon l'axe du faisceau laser.

L'amplitude du signal électrique s(t) résultant du passage dans le faisceau d'une particule animée d'une vitesse V s'exprime ainsi:

$$s(t) = 2S\sqrt{P_{OL}P_{SR}}.\exp\left(-\frac{2 \cdot V_{trans}^2 \cdot (t-t_0)^2}{\omega^2(z)}\right).\cos\left(2\pi\left[\frac{2}{\lambda}V_{long}.(t-t_0) + \frac{2.V_{trans}^2.}{\lambda.z_0\left[1+\left(\frac{z_R}{z_0}\right)^2\right]}.\frac{(t-t_0)^2}{2}\right] + \Phi_0\right)$$

Où :

- $S$ est la sensibilité du détecteur
- $P_{OL}$ est la puissance d'oscillateur local
- $P_{SR}$ est la puissance du signal rétrodiffusé couplé dans la fibre :

$$P_{sr} = \frac{4.\lambda^2.P_e.S_{eff}}{\pi^2\omega^4(z_0)}.\exp\left(-\frac{4y_0^2}{\omega^2(z_0)}\right)$$

- $\lambda$ est la longueur d'onde du laser
- $P_e$ est la puissance laser émise

- $S_{eff}$ est la section efficace de rétrodiffusion de la particule à la longueur d'onde considérée
- $\omega(z)$ est le rayon du faisceau laser gaussien défini par

$$\omega(z) = \omega_0 \sqrt{1 + \left(\frac{z}{z_R}\right)^2}$$

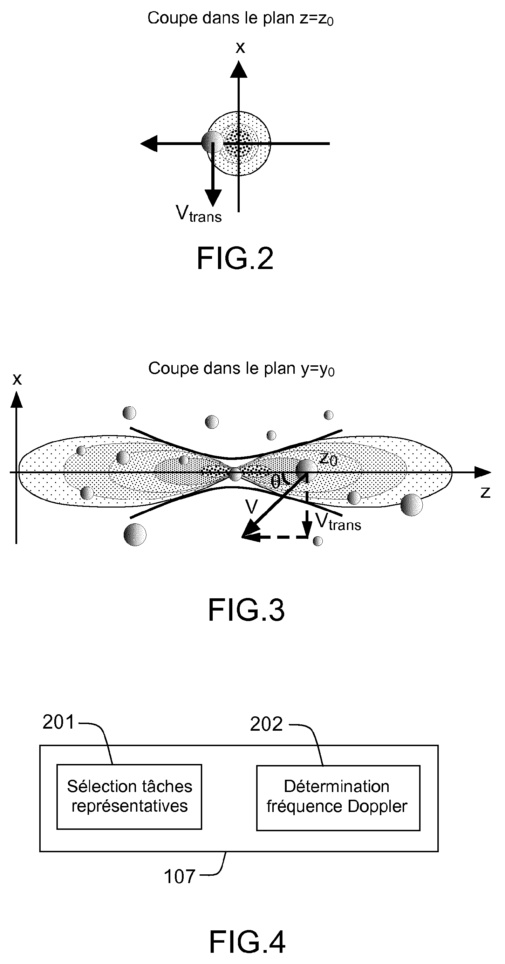

- $\omega_0$ est le rayon du faisceau laser gaussien au point de focalisation (waist)
- $V_{trans}$ est définie comme la projection de la vitesse de la particule considérée dans le plan orthogonal à l'axe du faisceau laser.
- $V_{long}$ est la projection de la vitesse $V$ de la particule considérée sur l'axe du faisceau de sorte que $V_{long}^2 + .\,V_{trans}^2 = V$.
- Le terme $\dfrac{2}{\lambda} V_{long}$ correspond à la fréquence Doppler.
- L'instant $t_0$ est l'instant pour lequel la distance de la particule considérée à l'axe de mesure est minimale, comme illustré sur la figure 2 présentant une coupe dans le plan $z = z_0$ et sur la figure 3 présentant une coupe dans le plan $y = y_0$.

Un module 104 permet de déterminer un diagramme temps fréquence du signal électrique. Ce diagramme est réalisé en utilisant typiquement une fenêtre temporelle de forme gaussienne et de longueur calée sur la durée attendue des tâches compte tenu de la vitesse et du diamètre du faisceau. Ces paramètres son également dépendants de conditions d'installation de l'anémomètre sur le porteur.

Pour un rayon du waist : $\omega_0 = 50\mu$m, le domaine de variation de la durée du signal sera de l'ordre de 200 ns à 20 $\mu$s.

Ce diagramme présente un ensemble de tâche correspondant aux passages des différentes particules devant le faisceau incident. Un module 105 permet de séparer et de localiser chaque tâche. Une tâche est constituée d'un ensemble de points connexes du diagramme temps-fréquence ayant dépassé un certain seuil fixé typiquement compris dans l'intervalle [8 ;14dB] avec comme valeur préférentielle 12dB dans le cas où le diagramme temps-fréquence correspond au spectrogramme du signal électrique, le niveau de référence 0dB correspondant au niveau moyen attendu en l'absence de particules. Pour tout ou partie des tâches un module 106 de calcul permet de calculer la moyenne des fréquences des points de la tache et également de calculer la pente des tâches, ainsi que leur durée et leur variation de fréquence. Cette pente représente l'évolution de la fréquence en fonction du temps dans le diagramme temps fréquence. Ces paramètres peuvent en particulier être obtenus par les relations suivantes :

$$P_b(f,t) = P_u(f,t) \Big/ \iint\limits_{t\hat{a}che} P_u(f,t)\, f\, t\, df\, dt$$

$$m_t = \iint\limits_{t\hat{a}che} P_u(f,t)\, t\, df\, dt$$

$$m_f = \iint\limits_{t\hat{a}che} P_u(f,t)\, f\, df\, dt$$

$$\sigma_t^2 = \iint\limits_{t\hat{a}che} P_u(f,t)\, t^2\, df\, dt - m_t^2$$

$$\rho_{t,f} = \iint\limits_{t\hat{a}che} P_u(f,t)\, t\, f\, df\, dt - m_t m_f$$

$$pente = \frac{\rho_{t,f}}{\sigma_t^2}$$

$$durée = 4\sqrt{2}\sigma_t$$

Dans lesquelles *tâche* est l'ensemble des points d'une desdites tâches, $P_u(f,t)$ est la valeur du graphique temps fréquence pour la fréquence $f$ et le temps $t$, $m_f$ est la moyenne de la fréquence de ladite tâche, *pente* est la pente de ladite tâche et *durée* la durée de la dite tâche.

Un module 107 permet de déterminer la vitesse air du système à partir de tout ou partie de la moyenne des fréquences, des pentes et des durées calculées par le module 106. Il peut par exemple déterminer une fréquence Doppler correspondant à la moyenne de tout ou partie des moyennes de la fréquence associées respectivement à une tâche. Enfin la vitesse air est calculée à partir de la fréquence Doppler par des relations connues de l'homme du métier.

Ces différents modules peuvent être réalisés sur un ou plusieurs processeurs génériques couplés à de la mémoire permettant de sauvegarder les données intermédiaires, mais également sur des processeurs dédiés, des réseaux logiques programmables de type FPGA ou PLD, ou tout autre type de dispositif permettant d'effectuer les déterminations décrites. Les différents modules pouvant se partager les ressources de calcul et de mémoire.

La figure 4 présente un mode de réalisation dans lequel le module 107 de détermination de la vitesse air comporte deux sous-modules. Le premier sous-module 201 permet de sélectionner les tâches les plus représentatives de la vitesse au point de focalisation. Cette sélection est réalisée en fonction de la durée et de la pente de chaque tâche. Les tâches sélectionnées sont les tâches pour lesquelles la condition suivante est vérifiée:

- ladite multiplication de ladite pente par le carré de ladite durée est inférieure à un seuil prédéterminé.

La vérification de cette condition permet de déterminer que la particule est une particule ayant coupé le faisceau laser à une distance au point de focalisation (ou distance au waist) inférieure à un seuil de distance (typiquement $z_{max}$ = $z_r$= 5mm pour un faisceau gaussien de rayon au point de focalisation égal à $\omega_0$ = 50$\mu m$).

On utilise pour cela les relations entre la distance au point de focalisation (c'est-à-dire la coordonnée $z_0$, référencée par rapport au point de focalisation, à laquelle la particule coupe le faisceau) et les caractéristiques de durée, de pente et de variation de fréquence de la tâche correspondante dans le diagramme temps fréquence :

$$duree = \frac{2.\omega(z_0)}{V_{trans}} = \frac{2.\omega_0.\sqrt{z_0^2 + z_R^2}}{V_{trans}.z_R}$$

$$pente = \frac{2.V_{trans}^2}{\lambda.z_0.\left[1+\left(\dfrac{z_R}{z_0}\right)^2\right]}$$

$$\Delta f = pente.duree = \frac{4.\omega_0.V_{trans}}{\lambda.z_R.\sqrt{1+\left(\dfrac{z_R}{z_0}\right)^2}}$$

avec par définition $z_R = \dfrac{\pi.\omega_0^2}{\lambda}$

et sachant que le rayon du faisceau laser gaussien à la coordonnée $z$ vaut $\omega(z) = \omega_0\sqrt{1+\left(\dfrac{z}{z_R}\right)^2}$

$V_{trans}$ est définie comme la projection de la vitesse de la particule considérée dans le plan orthogonal à l'axe du faisceau laser,

$\lambda$ est la longueur d'onde du laser.

Différentes méthodes permettent de sélectionner les particules coupant le faisceau à proximité du point de focalisation :

Une première méthode, qui ne fait pas l'objet de l'invention, consiste à sélectionner les tâches dont la durée est inférieure à un seuil de durée estimé en tenant compte de l'estimation de la vitesse transversale $V_{trans}$ à partir de la vitesse Doppler et d'une hypothèse d'orientation de la vitesse de la particule par rapport au faisceau.

Le premier seuil de durée se déduit de l'équation $premier\_seuil\_duree = \dfrac{2.\omega_0.\sqrt{z_{max}^2 + z_R^2}}{V_{trans}.z_R}$ soit

$$premier\_seuil\_duree = \frac{2\sqrt{2}.\omega_0}{V_{trans}}$$ en considérant $z_{max} = z_r$. Ce seuil vaudra ainsi 1,4 $\mu$s pour $\omega_0 = 50\mu m$ et $V_{trans} = 100m/s$.

Une seconde méthode, qui ne fait pas l'objet de l'invention, consiste à sélectionner les tâches dont la variation de fréquence $\Delta f = duree.pente$ est inférieure en valeur absolue à un seuil de variation de fréquence estimé en tenant compte de l'estimation de la vitesse transversale $V_{trans}$ à partir de la vitesse Doppler et d'une hypothèse d'orientation de la vitesse de la particule par rapport au faisceau, l'orientation de la vitesse de la particule par rapport au faisceau laser peut par exemple être estimée à partir l'orientation du vecteur vitesse air par rapport à l'axe de mesure et d'un éventuel terme de compensation du champ aérodynamique local.).

Le deuxième seuil de variation de fréquence se déduit de l'équation

$$deuxième\_seuil\_\Delta f = \frac{4.V_{trans}}{\pi.\omega_0.\sqrt{1+\left(\dfrac{z_R}{z_{max}}\right)^2}}$$ soit $deuxième\_seuil\_\Delta f = \dfrac{4.V_{trans}}{\pi.\omega_0.\sqrt{2}}$ en considérant

$z_{max} = z_r$. Il vaudra ainsi environ 1.8 MHz pour $\omega_0 = 50\mu$m et $V_{trans} = 100m/s$.

La méthode selon l'invention consiste à sélectionner les particules pour lesquelles $z_0 < z_{max}$, la coordonnée $z_0$ de la particule étant calculée pour chaque tâche détectée, à partir de l'équation suivante (qui résulte d'une combinaison des équations précédentes) qui présente l'intérêt de ne nécessiter aucune hypothèse d'orientation de la vitesse de la particule par rapport au faisceau.

$$z_0 = \frac{pente \cdot duree^2 \cdot \lambda \cdot z_R{}^2}{8 \cdot \omega_0{}^2}$$

ou encore $z_0 = \dfrac{pente \cdot duree^2 \cdot \pi^2 \cdot \omega_0{}^2}{8 \cdot \lambda}$

Ayant estimé $z_0$ à partir de l'équation précédente, le seuillage consiste à sélectionner les particules pour lesquelles $|z_0| < z_{max}$ avec par exemple $z_{max} = z_r$. Cela revient aussi à sélectionner les particules pour lesquelles

$$troisième\_seuil.pente \cdot duree^2 < \frac{8 \cdot \lambda \cdot z_{max}}{\pi^2 \cdot \omega_0^2}$$ soit, en considérant $z_{max} = z_r$,

$$troisième\_seuil.pente \cdot duree^2 < \frac{8}{\pi}$$ ou encore $troisième\_seuil.\Delta f \cdot duree < \dfrac{8}{\pi}$

Ensuite une fréquence Doppler est déterminée par le sous-module 202. Cette fréquence Doppler correspond à la moyenne des fréquences moyennes fournies par le module 106 pour les tâches précédemment sélectionnées par le sous-module 201. Enfin la vitesse air est calculée à partir de la fréquence Doppler par des relations connues de l'homme du métier. Ainsi pour chaque axe de mesure, la vitesse selon cet axe est calculée à partir de la fréquence Doppler correspondante grâce à la relation suivante : $V_{axe\_i} = \dfrac{\lambda}{2} F_{Doppler\_i}$. Les 3 composantes du vecteur vitesse air se déduisent des N mesures (où N$\geq$3 est le nombre d'axes de mesure, c'est-à-dire de faisceaux laser non coplanaires utilisés) par un calcul matriciel résultant de l'application d'un algorithme de type moindre carrés.

Si H est la matrice d'observation définissant l'orientation des axes de mesure dans le repère lié au porteur

$$H = \begin{bmatrix} \cos\Theta_1.\cos\Delta_1 & \sin\Theta_1.\cos\Delta_1 & \sin\Delta_1 \\ \cos\Theta_2.\cos\Delta_2 & \sin\Theta_2.\cos\Delta_2 & \sin\Delta_2 \\ ... & ... & ... \\ \cos\Theta_N.\cos\Delta_N & \sin\Theta_N.\cos\Delta_N & \sin\Delta_N \end{bmatrix}$$

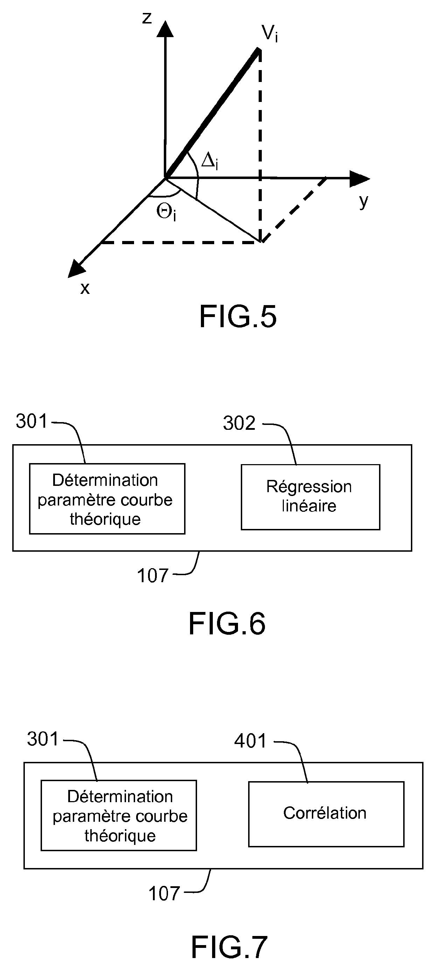

La localisation des différents angles est présentée sur la figure 5. $\begin{bmatrix} V_X \\ V_Y \\ V_Z \end{bmatrix} = \begin{bmatrix} H^T.H \end{bmatrix}^{-1}.H^T.\begin{bmatrix} V_1 \\ V_2 \\ ... \\ V_N \end{bmatrix}$ et la vitesse

air est définie par son module $TAS = \sqrt{V_X^2 + V_Y^2 + V_Z^2}$ et les angles d'incidence $AOA = \arctan\left(\dfrac{V_Z}{V_X}\right)$, et de dérapage $SSA = \arctan\left(\cos AOA.\dfrac{V_Y}{V_X}\right)$.

La figure 6 présente un autre mode de réalisation du système dans lequel le module de détermination de la vitesse air 107 comporte deux sous-modules. Le premier sous module 301 permet de déterminer les paramètres d'une courbe théorique afin que cette courbe théorique se rapproche le plus des points du diagramme temps-fréquence. Cette détermination est réalisée par régression linéaire. Un deuxième sous module 302 permet de déterminer une singularité dans la dite courbe théorique la fréquence de cette singularité correspond à la fréquence Doppler représentant la vitesse air du système et pour laquelle la courbe théorique présente une singularité.

Le sous module 301 de détermination des paramètres par régression linéaire utilise au moins l'une des relations théoriques reliant les caractéristiques de pente et durée avec la coordonnée $z_0$ du point d'intersection de la particule et du faisceau laser, telle que définie dans l'équation suivante :

$$pente = -\frac{2.V_{trans}^2}{\lambda.z.\left[1 + \left(\dfrac{z_R}{z}\right)^2\right]} \text{ et } duree = \frac{2.\omega_0.\sqrt{z_0^2 + z_R^2}}{V_{trans}.z_R}$$

Dans ces relations, $z_0$ représente la distance entre le point de focalisation du faisceau incident et le point où la particule coupe le faisceau incident, $\lambda$ est un paramètre du système, $V_{trans}$ est la projection de la vitesse de la particule considérée dans le plan orthogonal à l'axe du faisceau laser et $z_R$ vaut $z_R = \dfrac{\pi.\omega_0^2}{\lambda}$ où $\omega_0$, le rayon du faisceau au point de focalisation, est un est paramètre du système qui caractérise la longueur de la zone de focalisation.

Ce sous module utilise également différents modèles paramétriques représentant la relation entre $z$ la distance entre le point de focalisation du faisceau incident et le point où la particule coupe le faisceau incident et $f_d$ la fréquence Doppler du faisceau rétrodiffusé par la particule. Les modèles paramétriques sont par exemple :

$$z = a + bf_d \,,$$

$$z = a + bf_d + cf_d^2$$

ou

$$f_d = \alpha + \beta z + \gamma z^2$$

La méthode par régression linéaire va permettre de calculer les paramètres *a*, *b* et *c* des différents modèles paramétriques.

Dans le cas l'utilisation du modèle paramétrique $z = a + bf_d$

Chaque tâche *i* est caractérisée par la moyenne des fréquences $f_i$ des points de la tâche, la pente *pente$_i$* et la durée *duree$_i$* de la dite tâche et la distance $z_i$ du passage de la particule (correspondant à cette tâche) par rapport au point de focalisation. La valeur de $z_i$ est obtenue par l'une des quatre relations suivantes :

- Resolution par la durée

$$z_i^2 = \left( \frac{duree_i . V_{trans} . z_R .}{2.\omega_0} \right)^2 - z_R^2$$

- Résolution par la variation de fréquence

$$z_i^2 = \frac{\left( \lambda . z_R^2 . \Delta f \right)^2}{\left( 4.\omega_0 . V_{trans} \right)^2 - \left( \lambda . z_R . \Delta f \right)^2}$$

- Résolution par la pente

$$z_i = - \frac{V_{trans}^2 \pm \sqrt{V_{trans}^4 - \rho_i^2 . \lambda^2}}{\rho_i . \lambda}$$

- Résolution par la pente et la durée (sans hypothèse de vitesse transversale $V_{trans}$)

$$z_i = \frac{pente_i \cdot duree_i^2 \cdot \pi^2 \cdot \omega_0^2}{8 \cdot \lambda} .$$

Afin de stabiliser le calcul, un facteur de qualité peut être associé à chaque tâche pour tenir compte de l'imprécision sur la détermination de la durée et/ou de la pente dans le calcul de *z*.

Afin d'effectuer la régression linéaire, permettant d'obtenir les coefficients *a* et *b* d'une droite d'équation $z = a + bf_d$, la représentation matricielle $Z = F.X$ est utilisée. Dans cette représentation:

$$Z = \begin{bmatrix} z_1 \\ z_2 \\ \vdots \\ z_N \end{bmatrix}, \quad F = \begin{bmatrix} 1 & f_1 \\ 1 & f_2 \\ \vdots & \vdots \\ 1 & f_N \end{bmatrix} \quad \text{et} \quad X = \begin{bmatrix} a & b \end{bmatrix} .$$

L'estimation de la valeur du vecteur *X* est obtenue par une régression linéaire réalisée sur *N* tâches. On utilise la méthode des moindres carrés pondérés et pour ne pas donner trop de poids aux valeurs bruitées la matrice *W* est

introduite :

$$W = \begin{bmatrix} r_1 & 0 & .. & 0 \\ 0 & r_2 & 0 & : \\ : & 0 & . & 0 \\ 0 & .. & 0 & r_N \end{bmatrix}$$

En utilisant la méthode des moindres carrés pondérés, il est alors obtenu que l'estimation de la valeur du vecteur $X$ vaut :

$$\hat{X} = (F^t W^t W F)^{-1} F^t W^t Z$$

Il est connu que la vitesse air du système correspond à la vitesse d'une particule passant au point de focalisation du faisceau laser. Il est donc nécessaire de trouver la fréquence de Doppler qui correspond à la fréquence d'une particule passe au point de focalisation, donc pour laquelle $z = a + bf_d = 0$. Cette fréquence de Doppler vaut donc $f_d = -a/b$ où $a$ et $b$ sont les coefficients du vecteur $\hat{X}$. Enfin la vitesse air est calculée à partir de la fréquence Doppler par des relations connues de l'homme du métier.

Les mesures effectuées pour chaque faisceau laser permettent de déterminer la projection du vecteur vitesse selon chacun des axes correspondants. Le module TAS et les angles AOA et SSA (TAS True Air Speed est le module du vecteur vitesse air, AoA signifiant angle d'attaque ou en anglais Angle of Attack et SSA signifiant angle de décalage ou en anglais Side Slip Angle définissent sont orientation. Si l'on considère le vecteur vitesse air défini en coordonnées cartésienne par ses 3 composantes Vx, Vy, Vz dans un repère lié au porteur où, par convention, l'axe x pointe vers l'avant, y vers la droite et z vers le bas, on aura $TAS = \sqrt{V_X^2 + V_Y^2 + V_Z^2}$ , $AOA = \arctan\left(\dfrac{V_Z}{V_X}\right)$ ,

$SSA = \arctan\left(\cos AOA . \dfrac{V_Y}{V_X}\right)$ définissant le vecteur vitesse air en sont déduits par le biais d'un algorithme de type moindre carrés.

Dans le cas de l'utilisation du modèle paramétrique $z = a + bf_d + cf_d^2$

Dans cette variante un terme est ajouté dans le modèle paramétrique entre $z$ et $f_d$. Ce terme permet de modéliser le fait que le gradient de vitesse n'est pas constant (le profil de pente en fonction de la fréquence est dissymétrique).

La régression linéaire est alors réalisée en utilisant la relation matricielle suivante :

$$Z = F_1 . X$$

Dans laquelle

$$Z = \begin{bmatrix} z_1 \\ z_2 \\ : \\ z_N \end{bmatrix}, \quad F_1 = \begin{bmatrix} 1 & f_1 & f_1^2 \\ 1 & f_2 & f_2^2 \\ : & : & : \\ 1 & f_N & f_N^2 \end{bmatrix} \quad \text{et} \quad X = \begin{bmatrix} a & b & c \end{bmatrix}$$

L'estimation de la valeur du vecteur $X$ est obtenue par une régression linéaire réalisée sur $N$ tâches. On utilise la méthode des moindres carrés pondérés et pour ne pas donner trop de poids aux valeurs bruitées la matrice $W$ est introduite :

$$W = \begin{bmatrix} r_1 & 0 & .. & 0 \\ 0 & r_2 & 0 & : \\ : & 0 & . & 0 \\ 0 & .. & 0 & r_N \end{bmatrix}$$

En utilisant la méthode des moindres carrés pondérés, il est alors obtenu que l'estimation du vecteur $X$ est :

$$\hat{X} = (F_1^t W^t W F_1)^{-1} F_1^t W^t Z$$

Les paramètres $a$, $b$ et $c$ correspondent aux coefficients du vecteur $\hat{X}$. La fréquence de Doppler correspond alors à la fréquence pour laquelle la particule passe au point de focalisation, donc pour la quelle $z = a + bf_d + cf_d^2 = 0$. Cette fréquence de Doppler $f_d$ est celle des deux racines de l'équation du second degré $a + bf_d + cf_d^2 = 0$ dans laquelle $a$, $b$ et $c$ sont les coefficients du vecteur $\hat{X}$ qui appartient au domaine de fréquence délimité par les valeurs extrêmes de l'ensemble discret ($f_1, \ldots , f_N$) (cette ensemble est donc les fréquences Doppler des N tâches citées précédemment). Enfin la vitesse air est calculée à partir de la fréquence Doppler par des relations connues de l'homme du métier.

Dans le cas de l'utilisation du modèle paramétrique $f_d = \alpha + \beta_z + \gamma_z^2$

Dans cette variante la régression linéaire est alors réalisée en utilisant la relation matricielle suivante :

$$F_2 = Z.X$$

Dans laquelle

$$F_2 = \begin{bmatrix} f_1 \\ f_2 \\ : \\ f_N \end{bmatrix}, \ Z = \begin{bmatrix} 1 & z_1 & z_1^2 \\ 1 & z_2 & z_2^2 \\ : & : & : \\ 1 & z_N & z_N^2 \end{bmatrix}$$

et

$$X = \begin{bmatrix} \alpha & \beta & \gamma \end{bmatrix}$$

L'estimation de la valeur du vecteur $X$ est obtenue par régression linéaire qui est donc réalisée sur $N$ tâches. On utilise la méthode des moindres carrés pondérés et pour ne pas donner trop de poids aux valeurs bruitées la matrice $W$ est introduite :

$$W = \begin{bmatrix} r_1 & 0 & .. & 0 \\ 0 & r_2 & 0 & : \\ : & 0 & . & 0 \\ 0 & .. & 0 & r_N \end{bmatrix}$$

En utilisant la méthode des moindres carrés pondérés, il est alors obtenu que l'estimation du vecteur $X$ est :

$$\hat{X} = (Z^t W^t W Z)^{-1} Z^t W^t F_2$$

Les paramètres $\alpha$, $\beta$ et $\gamma$ correspondent aux coefficients du vecteur $\hat{X}$. La fréquence de Doppler correspond alors à la fréquence pour laquelle la particule passe au point de focalisation, donc pour laquelle $z = 0$. Cette fréquence de Doppler est donc $f_d = \alpha$. Enfin la vitesse air est calculée à partir de la fréquence Doppler par des relations connues de l'homme du métier.

Ces différents modules peuvent être réalisés sur un ou plusieurs processeurs génériques couplés à de la mémoire permettant de sauvegarder les données intermédiaires, mais également sur des processeurs dédiés, des réseaux logiques programmables de type FPGA ou PLD, ou tout autre type de dispositif permettant d'effectuer les déterminations décrites. Les différents modules pouvant se partager les ressources de calcul et de mémoire.

La figure 7 présente un autre mode de réalisation du module de détermination de la vitesse air 107 dans lequel le sous-module 302 de régression linéaire présent dans la figure 3 est remplacé par un sous module de corrélation 401.

Dans une première variante, le sous module 401 de détermination des paramètres par corrélation utilise la relation théorique reliant la pente et le point d'intersection de la particule et du faisceau lasser $z$, telle que définie dans l'équation suivante :

$$\rho = -\frac{2.V_{trans}^{\;2}}{\lambda.z.\left[1 + \left(\dfrac{z_R}{z}\right)^2\right]} = V_{trans}^{\;2} g(z)$$

Dans cette relation $\rho$ représente la pente de la tâche, $z$ la distance entre le point de focalisation du faisceau incident et le point où la particule coupe le faisceau incident, $\lambda$ est un paramètre du système, $V_{trans}$ est la projection de la vitesse de la particule considérée dans le plan orthogonal à l'axe du faisceau laser.

Ce sous module utilise également un modèle paramétrique représentant la relation entre $z$ la distance entre le point de focalisation du faisceau incident et le point où la particule coupe le faisceau incident et $f_d$ la fréquence Doppler d'un faisceau rétrodiffusé par la particule. Le modèle paramétrique est par exemple :

$$z = a + b f_d + c f_d^{\,2}$$

La méthode par corrélation va permettre de calculer les paramètres $a$, $b$ et $c$ de ce modèle paramétrique. La relation matricielle suivante est définie :

$$Z = G.X$$

Dans laquelle

$$Z = \begin{bmatrix} \rho_1 \\ \rho_2 \\ \vdots \\ \rho_N \end{bmatrix}, \quad G = \begin{bmatrix} g(z_1) \\ g(z_2) \\ \vdots \\ g(z_N) \end{bmatrix} \quad \text{et} \quad X = \begin{bmatrix} V_{trans}^{\;2} \end{bmatrix} .$$

L'estimation du vecteur $X$ est alors définie par l'équation:

$$\hat{X} = G^* Z$$

Dans laquelle :

$$G^* = (G^t G)^{-1} G^t$$

Le critère de vraisemblance est alors défini comme la sommes des résidus au carré entre $Z$ et $G\hat{X}$ :

$$\Phi(a,b,c) = \left\| Z - G\hat{X} \right\|^2 = \left\| (Id - GG^*)Z \right\|^2$$

Nous cherchons alors à minimiser ce critère de vraisemblance. Par développement il est obtenu que :

$$\Phi(a,b,c) = \left\| Z \right\|^2 - \Phi'(a,b,c)$$

Avec :

$$\Phi'(a,b,c) = (G^t Z)^t (G^t G)^{-1} (G^t Z)$$

Il est donc possible soit de chercher la valeur du triplet ($a,b,c$) qui minimise $\Phi(a,b,c)$ ou bien les valeurs qui maximise $\Phi'(a,b,c)$. Différentes méthodes sont connues de l'homme de l'art comme par exemple la méthode du gradient qui permet de converger rapidement vers un minimum local dans l'espace à trois dimensions ($a,b,c$). On peut aussi effectuer un balayage systématique d'une zone de l'espace censée contenir le minimum, éventuellement complété par la méthode du gradient pour affiner la recherche.

La fréquence de Doppler correspond alors à la fréquence pour laquelle la particule passe au point de focalisation, donc pour la quelle $a + bf_d + cf_d^2 = 0$. Connaissant la valeur de $a,b,c$, il est possible de trouver la valeur des racines de l'équation du second degré suivante $a + bf_d + cf_d^2 = 0$ La fréquence Doppler correspond alors à la racine qui appartient au domaine de fréquence délimité par les valeurs extrêmes de l'ensemble discret ($f_1, ... , f_N$) (cette ensemble est donc les fréquences Doppler des N tâches citées précédemment). Enfin la vitesse air est calculée à partir de la fréquence Doppler par des relations connues de l'homme du métier.

Dans une deuxième variante ce module de corrélation peut également calculer les paramètres $a$, $b$ et $c$, de façon à ce que l'ensemble des points ($\rho_i,f_i$) représentant la moyenne de la fréquence et de la pente des différentes tâches, soient le plus proche possible d'une courbe théorique d'équation :

$$\rho = -\frac{2.V_{trans}^2}{\lambda.(a + b.f + c.f^2).\left[1 + \left(\frac{z_R}{a + b.f + c.f^2}\right)^2\right]} = V_{trans}^2.h(f)$$

Comme dans le cas précédent la méthode des moindres carrés est appliquée. La relation matricielle suivante est définie :

$$Z = H.X$$

Dans laquelle

$$Z = \begin{bmatrix} \rho_1 \\ \rho_2 \\ \vdots \\ \rho_N \end{bmatrix}, \quad H = \begin{bmatrix} h(f_1) \\ h(f_2) \\ \vdots \\ h(f_N) \end{bmatrix} \text{ et } X = \begin{bmatrix} V_{trans}^{\,2} \end{bmatrix} \quad .$$

On se ramène au même problème que la première variante car $h(f_i) = g(z_i)$.

Dans une troisième variante, le sous module 401 de détermination des paramètres par corrélation utilise la relation théorique reliant la variation de fréquence $\Delta f$ et la coordonnée $z$ du point d'intersection de la particule et du faisceau laser, telle que définie dans l'équation suivante :

$$\Delta f = pente.duree = \frac{4.\omega_0.V_{trans}}{\lambda.z_R.\sqrt{1 + \left(\dfrac{z_R}{z_0}\right)^2}} = V_{trans}\, g(z)$$

Dans cette relation $\Delta f$ représente la variation de fréquence de la tâche, $z$ la distance entre le point de focalisation du faisceau incident et le point où la particule coupe le faisceau incident, $\lambda$ est un paramètre du système, $V_{trans}$ est la projection de la vitesse de la particule considérée dans le plan orthogonal à l'axe du faisceau laser et $z_R$ un est paramètre du système.

Ce sous module utilise également un modèle paramétrique représentant la relation entre $z$ la distance entre le point de focalisation du faisceau incident et le point où la particule coupe le faisceau incident et $f_d$ la fréquence Doppler d'un faisceau rétrodiffusé par la particule. Le modèle paramétrique est par exemple :

$$z = a + bf_d + cf_d^{\,2}$$

La méthode par corrélation va permettre de calculer les paramètres $a$, $b$ et $c$ de ce modèle paramétrique. La relation matricielle suivante est définie :

$$Z = G.X$$

Dans laquelle

$$Z = \begin{bmatrix} \rho_1 \\ \rho_2 \\ \vdots \\ \rho_N \end{bmatrix}, \quad G = \begin{bmatrix} g(z_1) \\ g(z_2) \\ \vdots \\ g(z_N) \end{bmatrix} \text{ et } X = \begin{bmatrix} V_{trans}^{\,2} \end{bmatrix} \quad .$$

L'estimation du vecteur $X$ est alors définie par l'équation :

$$\hat{X} = G^{*}Z$$

Dans laquelle :

$$G^* = (G^t G)^{-1} G^t$$

Le critère de vraisemblance est alors défini comme la sommes des résidus au carré entre $Z$ et $G\hat{X}$ :

$$\Phi(a,b,c) = \left\| Z - G\hat{X} \right\|^2 = \left\| (Id - GG^*)Z \right\|^2$$

Nous cherchons alors à minimiser ce critère de vraisemblance. Par développement il est obtenu que :

$$\Phi(a,b,c) = \left\| Z \right\|^2 - \Phi'(a,b,c)$$

Avec :

$$\Phi'(a,b,c) = (G^t Z)^t (G^t G)^{-1} (G^t Z)$$

Il est donc possible soit de chercher la valeur du triplet ($a,b,c$) qui minimise $\Phi(a,b,c)$ ou bien les valeurs qui maximise $\Phi'(a,b,c)$. Différentes méthodes sont connues de l'homme de l'art comme par exemple la méthode du gradient qui permet de converger rapidement vers un minimum local dans l'espace à trois dimensions ($a,b,c$). On peut aussi effectuer un balayage systématique d'une zone de l'espace censée contenir le minimum, éventuellement complété par la méthode du gradient pour affiner la recherche.

Les paramètres $a$, $b$ et $c$ correspondent aux coefficients du vecteur $\hat{X}$. La fréquence de Doppler correspond alors à la fréquence pour laquelle la particule passe au point de focalisation, donc pour la quelle $a + bf_d + cf_d^2 = 0$. Connaissant la valeur de $a$, $b$ et $c$, il est possible de trouver la valeur des racines de l'équation du second degré suivante $0 = a + bf_d + cf_d^2$ La fréquence Doppler correspond alors à la plus petite la plus grande, la plus... racine de ladite équation du second degré. Enfin la vitesse air est calculée à partir de la fréquence Doppler par des relations connues de l'homme du métier.

Dans une quatrième variante ce module de corrélation peut également calculer les paramètres $a$, $b$ et $c$, de façon à ce que l'ensemble des points ($\Delta f_i, f_i$) représentant la moyenne de la fréquence et de la pente des différentes tâches, soient le plus proche possible d'une courbe théorique d'équation :

$$\Delta f = pente.duree = \frac{4.\omega_0.V_{trans}}{\lambda.z_R.\left[1+\left(\dfrac{z_R}{z_0}\right)^2\right]} = V_{trans}\,h(f).$$

Comme dans le cas précédent la méthode des moindres carrés est appliquée. La relation matricielle suivante est définie :

$$Z = H.X$$

Dans laquelle

$$Z = \begin{bmatrix} \rho_1 \\ \rho_2 \\ \vdots \\ \rho_N \end{bmatrix}, \quad H = \begin{bmatrix} h(f_1) \\ h(f_2) \\ \vdots \\ h(f_N) \end{bmatrix} \text{ et } X = \begin{bmatrix} V_{trans}{}^2 \end{bmatrix} \ .$$

On se ramène au même problème que la troisième variante car $h(f_i) = g(z_i)$.

Ces différents modules peuvent être réalisés sur un ou plusieurs processeurs génériques couplés à de la mémoire permettant de sauvegarder les données intermédiaires, mais également sur des processeurs dédiés, des réseaux logiques programmables de type FPGA ou PLD, ou tout autre type de dispositif permettant d'effectuer les déterminations décrites. Les différents modules pouvant se partager les ressources de calcul et de mémoire.

**Revendications**

1.  Système d'anémométrie laser comprenant :

    - un ensemble d'au moins une source laser (101) cohérente fournissant un faisceau incident, ledit faisceau étant rétrodiffusé par un ensemble de particules traversant ledit faisceau incident,
    - des moyens de mélange (102), respectivement associés à une source laser, dudit faisceau rétrodiffusé et d'un faisceau de référence, ledit faisceau de référence étant la duplication dudit faisceau incident, créant une onde d'interférométrie
    - des moyens de conversion (103), respectivement associés à une source laser, convertissant ladite onde en un signal électrique dont l'intensité instantanée est proportionnelle à la puissance instantanée de ladite onde, des premiers moyens de détermination (104), respectivement associés à une source laser, d'un diagramme temps fréquence dudit signal électrique,
    - des deuxièmes moyens de détermination (105), respectivement associés à une source laser, de tâches dudit diagramme, chaque tâche étant un ensemble de points connexes dudit diagramme, ayant dépassé un seuil de détection
    - des moyens de calcul (106), respectivement associés à une source laser, d'une moyenne de la fréquence, d'une durée et d'une pente caractérisant l'évolution de la fréquence en fonction du temps dans le diagramme temps fréquence, respectivement associées à une tâche ; **caractérisé en ce qu'**il comprend, en outre :
    - des troisièmes moyens de détermination (107) de la vitesse air à partir de tout ou partie desdites moyennes de la fréquence, desdites durées et desdites pentes, lesdits troisièmes moyens détermination étant en outre adaptés pour calculer d'une fréquence Doppler, ladite fréquence Doppler étant la moyenne de tout ou partie desdites moyennes de la fréquence respectivement associées à des tâches pour lesquelles la condition suivante est vérifiée : ladite multiplication de ladite pente par le carré de ladite durée est inférieure à un seuil prédéterminé.

2.  Système d'anémométrie laser selon la revendication 1 dans lequel les troisièmes moyens de détermination (107) de la vitesse air sont adaptés pour la détermination de paramètres d'une courbe théorique, de façon à ce que les points d'un graphique dont le premier axe représente une fréquence et le deuxième axe représente soit une pente soit une variation de fréquence, et contenant un ensemble de points, chaque point étant respectivement associé à une desdites tâches et chaque point ayant comme coordonnées suivant le premier et le second axe respectivement la moyenne de la fréquence et la pente ou la variation de fréquence de ladite tâche, se rapprochent le plus de ladite courbe et la détermination d'une fréquence Doppler, ladite fréquence Doppler correspondant à une singularité sur ladite courbe théorique.

3.  Système d'anémométrie laser selon la revendication 2 dans lequel les troisièmes moyens de détermination (107) de la vitesse air sont adaptés pour la détermination desdits paramètres par l'utilisation d'une régression linéaire à partir dudit graphique.

4.  Système d'anémométrie laser selon la revendication 2 dans lequel les troisièmes moyens de détermination (107) de la vitesse air sont adaptés pour la détermination desdits paramètres par l'utilisation d'une corrélation entre ladite courbe théorique et ledit graphique.

**5.** Système d'anémométrie laser selon l'une des revendications précédentes dans lequel lesdits moyens de calcul (106) sont adaptés pour l'utilisation des relations suivantes :

$$P_b(f,t) = \frac{P_u(f,t)}{\iint\limits_{tâche} P_u(f,t)\, f\, t\, df\, dt}$$

$$m_t = \iint\limits_{tâche} P_u(f,t)\, t\, df\, dt$$

$$m_f = \iint\limits_{tâche} P_u(f,t)\, f\, df\, dt$$

$$\sigma_t^2 = \iint\limits_{tâche} P_u(f,t)\, t^2\, df\, dt - m_t^2$$

$$\rho_{t,f} = \iint\limits_{tâche} P_u(f,t)\, t\, f\, df\, dt - m_t m_f$$

$$pente = \frac{\rho_{t,f}}{\sigma_t^2}$$

$$durée = 4\sqrt{2}\,\sigma_t$$

Dans lesquelles *tâche* est l'ensemble des points d'une desdites tâches, $P_u(f,t)$ est la valeur du graphique temps fréquence pour la fréquence *f* et le temps *t, $m_f$* est la moyenne de la fréquence de ladite tâche, *pente* est la pente de ladite tâche et *durée* est la durée de la dite tâche..

**6.** Système d'anémométrie laser selon l'une des revendications précédentes dans lequel lesdits moyens de calcul (106) sont adaptés pour la détermination de la pente d'une desdites tâches en utilisant une régression linéaire sur ladite tâche.

**7.** Procédé d'anémométrie laser comportant les étapes suivantes :

- Une étape d'émission d'un faisceau incident par au moins une source laser cohérente, ledit faisceau étant rétrodiffusé par un ensemble de particules traversant ledit faisceau incident,
- Une étape de mélange, respectivement associés à une source laser, dudit faisceau rétrodiffusé et d'un faisceau de référence, ledit faisceau de référence étant la duplication dudit faisceau incident, créant une onde d'interférométrie
- Une étape de conversion, respectivement associés à une source laser, convertissant ladite onde en un signal électrique dont l'intensité instantanée est proportionnelle à la puissance instantanée de ladite onde,
- Une première étape de détermination, respectivement associés à une source laser, d'un diagramme temps fréquence dudit signal électrique,
- Une deuxième étape de détermination, respectivement associés à une source laser, de tâches dudit diagramme, chaque tâche étant un ensemble de points connexes dudit diagramme, ayant dépassé un seuil de détection
- Une étape de calcul, respectivement associés à une source laser, d'une moyenne de la fréquence, d'une durée et d'une pente caractérisant l'évolution de la fréquence en fonction du temps dans le diagramme temps fréquence, respectivement associées à une tâche, **caractérisé en ce qu'**il comprend également :
- Une troisième étape de détermination de la vitesse air à partir de tout ou partie desdites moyennes de la fréquence, desdites durées et desdites pentes, ladite troisième étape comportant un calcul d'une fréquence Doppler, ladite fréquence Doppler étant la moyenne de tout ou partie desdites moyennes de la fréquence respectivements associées à des tâches pour lesquelles la condition suivante est vérifiée : ladite multiplication de ladite pente par le carré de ladite durée est inférieure à un seuil prédéterminé.

**Patentansprüche**

1.  Laser-Anemometliesystem, umfassend:

    - eine Einheit mindestens einer kohärenten Laserquelle (101), die einen einfallenden Strahl liefert, wobei der Strahl von einer Partikelgruppe, die den einfallenden Strahl durchquert, rückgestreut wird,
    - Mischmittel (102), die jeweils einer Laserquelle zugeordnet sind, des rückgestreuten Strahls und eines Referenzstrahls, wobei der Referenzstrahl die Duplikation des einfallenden Strahls ist, wobei eine Interferometriewelle entsteht,
    - Umwandlungsmittel (103), die jeweils einer Laserquelle zugeordnet sind, die die Welle in ein elektrisches Signal umwandeln, dessen momentane Intensität proportional zur momentanen Leistung der Welle ist,
    - erste Bestimmungsmittel (104), die jeweils einer Laserquelle zugeordnet sind, eines Zeit-Frequenz-Diagramms des elektrischen Signals,
    - zweite Bestimmungsmittel (105), die jeweils einer Laserquelle zugeordnet sind, von Tasks des Diagramms, wobei jede Task eine Gruppe zusammenhängender Punkte des Diagramms ist, die einen Detektionsgrenzwert überschritten haben,
    - Berechnungsmittel (106), die jeweils einer Laserquelle zugeordnet sind, eines Mittelwerts der Frequenz, einer Dauer und einer Steigung, die die Entwicklung der Frequenz in Abhängigkeit von der Zeit im Zeit-Frequenz-Diagramm kennzeichnet, die jeweils einer Task zugeordnet sind,

    **dadurch gekennzeichnet, dass** es ferner umfasst:

    - dritte Bestimmungsmittel (107) der Luftgeschwindigkeit ausgehend von der Gesamtheit oder einem Teil der Mittelwerte der Frequenz, der Dauern und der Steigungen, wobei die dritten Bestimmungsmittel ferner ausgebildet sind, um eine Doppler-Frequenz zu berechnen, wobei die Doppler-Frequenz der Mittelwert der Gesamtheit oder eines Teils der Mittelwerte der Frequenz ist, die jeweils Tasks zugeordnet sind, für die die folgende Bedingung verifiziert ist: die Multiplikation der Steigung mit dem Quadrat der Dauer ist kleiner als ein vorbestimmter Grenzwert.

2.  Laser-Anemometriesystem nach Anspruch 1, wobei die dritten Bestimmungsmittel (107) der Luftgeschwindigkeit für die Bestimmung von Parametern einer theoretischen Kurve derart ausgebildet sind, dass sich die Punkte einer Grafik, deren erste Achse die Frequenz darstellt und deren zweite Achse entweder eine Steigung oder eine Frequenzschwankung darstellt, und eine Gruppe von Punkten enthält, wobei jeder Punkt jeweils einer der Tasks zugeordnet ist und jeder Punkt als Koordinaten gemäß der ersten und der zweiten Achse jeweils den Mittelwert der Frequenz und die Steigung oder die Frequenzschwankung der Task hat, sich dieser Kurve am meisten annähern, und die Bestimmung einer Doppler-Frequenz, wobei die Doppler-Frequenz einer Besonderheit auf der theoretischen Kurve entspricht.

3.  Laser-Anemometriesystem nach Anspruch 2, wobei die dritten Bestimmungsmittel (107) der Luftgeschwindigkeit für die Bestimmung der Parameter durch Anwendung einer linearen Regression ausgehend von der Grafik ausgebildet sind.

4.  Laser-Anemometriesystem nach Anspruch 2, wobei die dritten Bestimmungsmittel (107) der Luftgeschwindigkeit für die Bestimmung der Parameter durch Anwendung einer Korrelation zwischen der theoretischen Kurve und der Grafik ausgebildet sind.

5.  Laser-Anemometriesystem nach einem der vorangehenden Ansprüche, wobei die Berechnungsmittel (106) für die Anwendung der folgenden Gleichungen ausgebildet sind:

$$P_b(f,t) = \left. P_u(f,t) \middle/ \iint_{t\hat{a}che} P_u(f,t)\, f\, t\, df\, dt \right.$$

$$m_t = \iint_{t\hat{a}che} P_u(f,t)\, t\, df\, dt$$

$$m_f = \iint_{t\hat{a}che} P_u(f,t)\, f\, df\, dt$$

$$\sigma_t^2 = \iint_{t\hat{a}che} P_u(f,t)\, t^2\, df\, dt - m_t^2$$

$$\rho_{t,f} = \iint_{t\hat{a}che} P_u(f,t)\, t\, f\, df\, dt - m_t m_f$$

$$pente = \frac{\rho_{t,f}}{\sigma_t^2}$$

$$dur\acute{e}e = 4\sqrt{2}\,\sigma_t$$

wobei *tâche* die Gesamtheit der Punkte einer der Tasks ist, $P_u(f,t)$ der Wert der Zeit-Frequenz-Grafik für die Frequenz *f* und die Zeit *t* ist, $m_f$ der Mittelwert der Frequenz der Task ist, *pente* die Steigung der Task ist und *durée* die Dauer der Task ist.

6. Laser-Anemometriesystem nach einem der vorangehenden Ansprüche, wobei die Berechnungsmittel (106) für die Bestimmung der Steigung einer der Tasks durch Anwendung einer linearen Regression auf die Tasks ausgebildet sind.

7. Laser-Anemometrieverfahren, das die folgenden Schritte umfasst:

   - einen Sendeschritt eines einfallenden Strahls durch mindestens eine kohärente Laserquelle, wobei der Strahl von einer Partikelgruppe, die den einfallenden Strahl durchquert, rückgestreut wird,
   - einen Mischschritt, der jeweils einer Laserquelle zugeordnet ist, des rückgestreuten Strahls und eines Referenzstrahls, wobei der Referenzstrahl die Duplikation des einfallenden Strahls ist, wobei eine Interferometriewelle entsteht,
   - einen Umwandlungsschritt, der jeweils einer Laserquelle zugeordnet ist, der die Welle in ein elektrisches Signal umwandelt, dessen momentane Intensität proportional zur momentanen Leistung der Welle ist,
   - einen ersten Bestimmungsschritt, der jeweils einer Laserquelle zugeordnet ist, eines Zeit-Frequenz-Diagramms des elektrischen Signals,
   - einen zweiten Bestimmungsschritt, der jeweils einer Laserquelle zugeordnet ist, von Tasks des Diagramms, wobei jede Task eine Gruppe zusammenhängender Punkte des Diagramms ist, die einen Detektionsgrenzwert überschritten haben,
   - einen Berechnungsschritt, der jeweils einer Laserquelle zugeordnet ist, eines Mittelwerts der Frequenz, einer Dauer und einer Steigung, die die Entwicklung der Frequenz in Abhängigkeit von der Zeit im Zeit-Frequenz-Diagramm kennzeichnet, die jeweils einer Task zugeordnet sind,

**dadurch gekennzeichnet, dass** es ebenfalls umfasst:

- einen dritten Bestimmungsschritt der Luftgeschwindigkeit ausgehend von der Gesamtheit oder einem Teil der Mittelwerte der Frequenz, der Dauern und der Steigungen, wobei der dritte Schritt die Berechnung einer Doppler-Frequenz aufweist, wobei die Doppler-Frequenz der Mittelwert der Gesamtheit oder eines Teils der Mittelwerte der Frequenz ist, die jeweils Tasks zugeordnet sind, für die die folgende Bedingung verifiziert ist: die Multiplikation der Steigung mit dem Quadrat der Dauer ist kleiner als ein vorbestimmter Grenzwert.

**Claims**

1. Laser anemometry system comprising:

   - an assembly of at least one coherent laser source (101) which provides an incident beam, the beam being retrodiffused by a group of particles which pass through the incident beam,
   - mixing means (102), which are respectively associated with a laser source, for the retrodiffused beam and a reference beam, the reference beam being the duplication of the incident beam, creating a wave of interferometry,
   - conversion means (103), which are respectively associated with a laser source, which convert the wave into an electrical signal whose instantaneous intensity is proportional to the instantaneous power of the wave,
   - first means (104), which are respectively associated with a laser source, for determining a time/frequency graph of the electrical signal,
   - second means (105), which are respectively associated with a laser source, for determining tasks of the graph, each task being a group of connected points of the graph, having exceeded a detection threshold,
   - calculation means (106), which are respectively associated with a laser source, for calculating a mean of the frequency, a duration and a gradient which characterise the development of the frequency in accordance with time in the time/frequency graph associated with a task, respectively,

   **characterised in that** it further comprises:

   - third means (107) for determining the air speed from all or some of the means of the frequency, the durations and the gradients, the third determination means further being capable of calculating a Doppler frequency, the Doppler frequency being the mean of all or some of the means of the frequency which are associated with tasks for which the following condition is verified, respectively: the multiplication of the gradient by the square of the duration is less than a predetermined threshold.

2. Laser anemometry system according to claim 1, wherein the third means (107) for determining the air speed are capable of determining parameters of a theoretical line so that the points of a graph, of which the first axis represents a frequency and the second axis represents either a gradient or a frequency variation and which contain a group of points, each point being associated with one of the tasks, respectively, and each point having as coordinates, along the first and second axis, the mean of the frequency and the gradient or the frequency variation of the task, respectively, move closest to the line and the determination of a Doppler frequency, the Doppler frequency corresponding to a singularity on the theoretical line.

3. Laser anemometry system according to claim 2, wherein the third means (107) for determining the air speed are capable of determining the parameters by the use of a linear regression from the graph.

4. Laser anemometry system according to claim 2, wherein the third means (107) for determining the air speed are capable of determining the parameters by the use of a correlation between the theoretical line and the graph.

5. Laser anemometry system according to any one of the preceding claims, wherein the calculation means (106) are capable of using the following relationships:

$$P_b(f,t) = \left. P_u(f,t) \middle/ \iint_{\text{tâche}} P_u(f,t)\, f\, t\, df\, dt \right.$$

$$m_t = \iint_{\text{tâche}} P_u(f,t)\, t\, df\, dt$$

$$m_f = \iint_{\text{tâche}} P_u(f,t)\, f\, df\, dt$$

$$\sigma_t^2 = \iint_{\text{tâche}} P_u(f,t)\, t^2\, df\, dt - m_t^2$$

$$\rho_{t,f} = \iint_{\text{tâche}} P_u(f,t)\, t\, f\, df\, dt - m_t m_f$$

$$pente = \frac{\rho_{t,f}}{\sigma_t^2}$$

$$dur\acute{e}e = 4\sqrt{2}\,\sigma_t$$

where *tache* is the group of points of one of the tasks, $P_u(f,t)$ is the value of the time/frequency graph for the frequency *f* and the time *t*, $m_f$ is the mean of the frequency of the task, *pente* is the gradient of the task and *durée* is the duration of the task.

6. Laser anemometry system according to any one of the preceding claims, wherein the calculation means (106) are capable of determining the gradient of one of the tasks using a linear regression on the task.

7. Laser anemometry method comprising the following steps:

   - a step of emission of an incident beam by at least one coherent laser source, the beam being retrodiffused by a group of particles which pass through the incident beam,
   - a step of mixing, respectively associated with a laser source, the retrodiffused beam and a reference beam, the reference beam being the duplication of the incident bean, creating an interferometry wave,
   - a step of conversion, respectively associated with a laser source, converting the wave into an electrical signal whose instantaneous intensity is proportional to the instantaneous power of the wave,
   - a first step of determining, respectively associated with a laser source, a time/frequency graph of the electrical signal,
   - a second step of determining, respectively associated with a laser source, tasks of the graph, each task being a group of connected points of the graph having exceeded a detection threshold,
   - a step of calculating, respectively associated with a laser source, a mean of the frequency, a duration and a gradient which characterise the development of the frequency as a function of the time in the time/frequency graph, respectively associated with a task,

   **characterised in that** it also comprises:

- a third step of determining the air speed from all or some of the means of the frequency, the durations and the gradients, the third step comprising a calculation of a Doppler frequency, the Doppler frequency being the mean of all or some of the means of the frequency associated with tasks, respectively, for which the following condition is verified: the multiplication of the gradient by the square of the duration is less than a predetermined threshold.

**FIG.1**

Coupe dans le plan z=z$_0$

FIG.2

Coupe dans le plan y=y$_0$

FIG.3

FIG.4

FIG.5

FIG.6

FIG.7

**RÉFÉRENCES CITÉES DANS LA DESCRIPTION**

**Documents brevets cités dans la description**

- EP 2282216 A